# EUROPÄISCHE PATENTSCHRIFT

(11) **EP 4 568 889 B1**
(45) Veröffentlichungstag und Bekanntmachung des Hinweises auf die Patenterteilung: **11.02.2026**
(21) Anmeldenummer: 23758223.4
(22) Anmeldetag: 09.08.2023
(51) Int. Cl.: B64D 11/00, E05B 15/04, E05B 41/00, E05C 3/16

(54) **VERRIEGELUNGSVORRICHTUNG ZUM VERRIEGELN EINER SCHWENKBAR GELAGERTEN TÜR EINES BEHÄLTERS, INSBESONDERE EINER GEPÄCKFACHTÜR EINES ÜBERKOPFGEPÄCKFACHS, SOWIE ÜBERKOPFGEPÄCKFACH MIT EINER SOLCHEN VERRIEGELUNGSVORRICHTUNG**
LOCKING DEVICE FOR LOCKING A PIVOTABLY MOUNTED DOOR OF A CONTAINER, IN PARTICULAR A LUGGAGE COMPARTMENT DOOR OF AN OVERHEAD LUGGAGE COMPARTMENT, AND OVERHEAD LUGGAGE COMPARTMENT WITH A LOCKING DEVICE OF THIS TYPE
DISPOSITIF DE VERROUILLAGE POUR VERROUILLER UNE PORTE MONTÉE PIVOTANTE D'UN CONTENANT, EN PARTICULIER D'UNE PORTE DE COMPARTIMENT À BAGAGES D'UN COMPARTIMENT À BAGAGES SITUÉ AU-DESSUS DES SIÈGES, ET COMPARTIMENT À BAGAGES SITUÉ AU-DESSUS DES SIÈGES DOTÉ D'UN DISPOSITIF DE VERROUILLAGE DE CE TYPE

(30) Priorität: 10.08.2022 AT 506172022
(43) Veröffentlichungstag der Anmeldung: 18.06.2025
(73) Patentinhaber: FACC AG, 4910 Ried im Innkreis (AT)
(72) Erfinder: KAMMERER, Bernhard, 4755 Zell an der Pram (AT); KLEMBARA, Lukas, 84106 Bratislava (SK)
(74) Vertreter: SONN Patentanwälte GmbH & Co KG
(86) Internationale Anmeldenummer: PCT/AT2023/060270
(87) Internationale Veröffentlichungsnummer: WO 2024/031120

(56) Entgegenhaltungen:
- EP-B1- 1 091 059
- EP-B1- 1 197 621
- DE-U1- 29 808 914
- US-A- 5 630 630

## Beschreibung

Die Erfindung betrifft eine Verriegelungsvorrichtung zum Verriegeln einer schwenkbar gelagerten Tür eines Behälters, insbesondere einer Gepäckfachtür eines Überkopfgepäckfachs, in der geschlossenen Position, mit einem Gehäuse, zumindest einem am Gehäuse um eine Drehachse federnd schwenkbar gelagerten Haken zum Einhaken in eine am Behälter angeordnete Halterachse in der geschlossenen Position, einem am Gehäuse um eine Drehachse federnd schwenkbar gelagerten Betätigungsgriff zum Entriegeln des zumindest einen in der geschlossenen Position eingehakten Hakens, wobei die Drehachse für den zumindest einen Haken und die Drehachse für den Betätigungsgriff koaxial angeordnet sind, der zumindest eine Haken durch den Betätigungsgriff über zumindest einen mit dem Betätigungsgriff drehfest verbundenen Mitnehmer derart betätigbar ist, dass bei Bewegung des Betätigungsgriffs über den zumindest einen Mitnehmer der zumindest eine Haken aus der geschlossenen Position bewegbar ist, und mit zumindest einer Anzeige zur Kennzeichnung eines unvollständig verriegelten Zustands der Tür, wobei die zumindest eine Anzeige zur Kennzeichnung eines unvollständig verriegelten Zustands der Tür an zumindest einer seitlichen Außenfläche des Betätigungsgriffs und im Wesentlichen senkrecht zur Drehachse für den Betätigungsgriff angeordnet ist.

Weiters betrifft die Erfindung ein Überkopfgepäckfach mit einem feststehenden Behälter und einer über zumindest ein Scharnier schwenkbare Gepäckfachtür und einer oben genannten Verriegelungsvorrichtung zur Verriegelung der Gepäckfachtür im geschlossenen Zustand. Die vorliegende Erfindung bezieht sich hauptsächlich auf Überkopfgepäckfächer und deren Verriegelungsvorrichtungen für Passagierflugzeuge. Eine Anwendung auch bei Schienenfahrzeugen oder anderen, zum Passagiertransport eingerichteten Transportmittel, beispielsweise Schiffen, ist jedoch auch denkbar.

Bei den Überkopfgepäckfächern für Flugzeuge unterscheidet man zwischen feststehenden Gepäckfächern (fixed bins) mit einem feststehenden Teil und einer verschwenkbaren Gepäckfachtür und bewegbaren Gepäckfächern (movable bins) mit einer absenkbaren Mulde oder Schütte und einer Umhüllung bzw. Einhausung. Die vorliegende Erfindung bezieht sich auf feststehende Überkopfgepäckfächer (fixed bins) mit verschwenkbarer Gepäckfachtür, welche mit einer Verriegelungsvorrichtung in der geschlossenen Position gehalten wird. Überkopfgepäckfächer werden meistens aus Verbundwerkstoffen aus faserverstärktem Kunststoff und einem Wabenkern in Leichtbauweise hergestellt. Die Bewegung der Gepäckfachtür bei den feststehenden Überkopfgepäckfächern und der Mulde bei den bewegbaren Überkopfgepäckfächern erfolgt in der Regel manuell. Insbesondere bei sehr großen Überkopfgepäckfächern mit einem großen Volumen zur Aufnahme von Gepäckstücken kann die Bewegung durch Kraftunterstützungselemente oder sogar elektrische Antriebe unterstützt werden.

Eine einfach ausgeführte und einfach bedienbare Verriegelungsvorrichtung insbesondere für Überkopfgepäckfächer für Flugzeuge mit rotierbarem Haken und verschiebbarem Betätigungsgriff ist beispielsweise aus der EP 0 166 723 B1 bekannt.

Wird eine Verriegelungsvorrichtung eines Überkopfgepäckfachs nicht ordnungsgemäß geschlossen, weil beispielsweise ein Gegenstand, z.B. ein Kleidungsstück, zwischen Haken und Halterachse eingeklemmt wird, besteht die Gefahr, dass sich die Gepäckfachtür während des Fluges öffnet und Gepäckstücke aus dem Überkopfgepäckfach fallen und Passagiere verletzen. Aus diesem Grund gibt es Anzeigen bzw. Indikatoren, welche dem Flugpersonal einen unvollständig verriegelten Zustand der Verriegelungsvorrichtung anzeigen, sodass vor dem Start des Flugzeugs sichergestellt werden kann, dass alle Überkopfgepäckfächer ordnungsgemäß geschlossen sind. Bekannte Anzeigen zur Kennzeichnung eines unvollständig verriegelten Zustands der Gepäckfachtür weisen meist eine grelle Farbe auf und befinden sich seitlich am Betätigungsgriff, welcher bei unzureichendem Verriegeln des Gepäckfachs leicht hervorsteht, wodurch die grelle Farbe der Anzeige zum Vorschein kommen soll. Bei bekannten Verriegelungsvorrichtungen dieser Art ist die Anzeige oft nicht verlässlich und bietet keine ausreichende Sicherheit. Erschwert wird die Situation dadurch, dass insbesondere bei sehr großen Überkopfgepäckfächern, welche ein sehr großes Volumen an Gepäckstücken aufnehmen können, die Durchbiegung des feststehenden Teils des Gepäckfachs relativ groß ist und ein ordnungsgemäßes Verriegeln der Verriegelungsvorrichtung nicht oder nur schwer möglich ist.

Aus dem Stand der Technik sind aufwändigere elektronische Verfahren bekannt, mit welchen eine Fehlfunktion der Verriegelungsvorrichtung angezeigt werden soll. Beispielsweise beschreibt die US 7,302,150 B2 ein bewegbares Überkopfgepäckfach (movable bin), bei welchem Lichtquellen und Lichtleiter verwendet werden, um unvollständige Verriegelungen zu erkennen und anzuzeigen. Nachteilig dabei sind der höhere Aufwand und die Beteiligung elektrooptischer Komponenten.

Aus der US 7,552,954 B2 ist ein Mechanismus bei einem bewegbaren Überkopfgepäckfach bekannt geworden, bei dem der Betätigungsgriff geöffnet bleibt, solange nicht beide Verriegelungsvorrichtungen ordnungsgemäß geschlossen sind.

Aus der US 2003/0146629 A1 ist eine komplizierte Verriegelungsvorrichtung für Überkopfgepäckfächer bekannt geworden, welche auch bei durchgebogenen Gepäckfächer optimal funktionieren soll. Eine Anzeige zur Kennzeichnung eines unvollständig verriegelten Zustands der Gepäckfachtür wird allerdings nicht beschrieben.

Eine Verriegelungsvorrichtung der gegenständlichen Art ist aus der EP 1 197 621 A1 bekannt geworden. Eine toleranz- oder beladungsbedingte Durchbiegung des Überkopfgepäckfachs kann zu Problemen bei der Betätigung der Verriegelungsvorrichtung führen.

Die Aufgabe der vorliegenden Erfindung besteht in der Schaffung einer oben genannten Verriegelungsvorrichtung und eines Überkopfgepäckfachs mit einer solchen Verriegelungsvorrichtung, durch welche eine zuverlässigere Verriegelung auch bei toleranz- oder beladungsbedingter Durchbiegung des Behälters, insbesondere des feststehenden Teils des Überkopfgepäckfachs, erreicht und eine optimale Funktion gewährleistet wird. Dennoch soll im Falle eines unvollständig verriegelten Zustands der Verriegelungsvorrichtung eine zuverlässige Kennzeichnung dieses Zustands erfolgen, sodass ein solcher ungewollter und potentiell gefährlicher Zustand sicher erkannt wird und entsprechende Gegenmaßnahmen getroffen werden können. Die Verriegelungsvorrichtung soll möglichst einfach und kostengünstig herstellbar und frei von elektronischen Komponenten sein. Nachteile vergleichbarer Vorrichtungen sollen vermieden oder zumindest reduziert werden.

Gelöst wird die erfindungsgemäße Aufgabe durch eine oben genannte Verriegelungsvorrichtung, wobei der Betätigungsgriff um einen vorgegebenen Winkelbereich frei bewegbar ist, bevor der zumindest eine Haken entriegelbar ist, und der zumindest eine Haken ein Langloch zur Aufnahme des zumindest einen Mitnehmers aufweist. Dadurch kann eine platzsparende Konstruktion des Zusammenwirkens zwischen Betätigungsgriff und Haken erzielt werden. Im Gegensatz zu einem außen auf den Haken wirkenden Mitnehmer des Betätigungsgriffs, welcher den Haken nur bei Drehung des Betätigungsgriffs in einer Richtung (der Öffnungsrichtung) betätigen und mitnehmen kann, ist bei der Anordnung eines Langlochs im Haken eine funktionelle Kopplung des Betätigungsgriffs und des Hakens auch bei der anderen Drehrichtung (der Schließrichtung) möglich. Das bedeutet, dass bei Betätigung des Betätigungsgriffs beim Schließen der Verriegelungsvorrichtung der Haken über diesen Mitnehmer im Langloch in die verriegelte Position gezwungen wird, also beispielsweise der Haken um die Halterachse gedrückt wird. Beim Öffnen der geschlossenen Verriegelungsvorrichtung nimmt der Mitnehmer nach dem Verstreichen des oben erwähnten, vorgegebenen Winkelbereichs, um den der Betätigungsgriff frei bewegbar ist, den zumindest einen Haken mit und zieht ihn von der Halterachse, um ein Öffnen der Tür des Behälters, vorzugsweise der Gepäckfachtür des Überkopfgepäckfachs, zu erzielen. Durch eine derartige Anordnung der zumindest einen Anzeige wird auch bei nicht ganz geschlossenen Verriegelungsvorrichtungen (beispielsweise, wenn einer von zwei Haken nicht in der Halterachse eingerastet ist) und bei sehr geringen Abweichungen des Betätigungsgriffs von seiner vollständig geschlossenen Position eine Sichtbarkeit der Anzeige gewährleistet. Dadurch, dass die zumindest eine Anzeige, vorzugsweise zwei Anzeigen an beiden Seiten des Betätigungsgriffs, im Wesentlichen senkrecht zur Dreh- oder Schwenkachse des Betätigungsgriffs und außen an den Seitenflächen des Betätigungsgriffs angeordnet ist, kann bei geringen Verschwenkungen des Betätigungsgriffs aus der geschlossenen Position um nur wenige Winkelgrade dennoch ein Teil der Anzeige erkannt werden. Somit wird beispielsweise das Flugpersonal verlässlich auf die Fehlschließung des Überkopfgepäckfachs hingewiesen und es können Unfälle durch herabfallendes Gepäck vermieden werden. Im Gegensatz dazu sind vergleichbare Anzeigen bei herkömmlichen Verriegelungsvorrichtungen für Überkopfgepäckfächer häufig schwer oder erst bei sehr starken Abweichungen der Position des Betätigungsgriffs von seiner geschlossenen Position erkennbar. Wie bei Anzeigen des Standes der Technik werden vorzugsweise grelle, auffällige Farben für die Anzeige verwendet, beispielsweise signalrot oder ähnliche Farben.

Vorteilhafterweise beträgt der vorgegebene Winkelbereich, um den der Betätigungsgriff frei bewegbar ist, 1° bis 10°, vorzugsweise 2° bis 5°. Dieser Winkelbereich, um den der Betätigungsgriff frei verschwenkbar ist, bevor er beim Öffnen der Verriegelungsvorrichtung den zumindest einen Haken betätigt, kann bei einem unvollständig verschlossenen Überkopfgepäckfach zu einer entsprechenden Auslenkung des Betätigungsgriffs führen, wodurch die zumindest eine Anzeige an der Außenfläche besser erkennbar ist.

Der zumindest eine Haken weist eine Länge von der Drehachse und jener Stelle, welche in der geschlossenen Position der Mitte der Halterachse entspricht, zwischen 24 mm und 35 mm auf. Aufgrund dieser Länge wirken sich geringe Winkelveränderungen des Betätigungsgriffs stärker auf eine tangentiale Verschiebung aus, wodurch bereits bei sehr geringen Verschwenkungen des Betätigungsgriffs schon relativ große Teile der zumindest einen Anzeige sichtbar werden. Der angegebene Längenbereich stellt einen optimalen Kompromiss zwischen geringer Baugröße der Verriegelungsvorrichtung und möglichst großer Hebellänge zur Erzielung möglichst großer Verschiebungen bei geringen Winkelveränderungen des Betätigungsgriffs dar.

Gemäß einem weiteren Merkmal der Erfindung weist jeder Haken einen Rastvorsprung zum Einrasten jedes Hakens in der Halterachse in der geschlossenen Position auf, welcher Rastvorsprung bei ordnungsgemäßer Verriegelung die Halterachse umschließt. Dadurch sind Lageänderungen aufgrund von Toleranzen und Verformungen eines beladenen Behälters ausgleichbar, vorzugsweise für Lageänderungen zwischen +1 mm und -6 mm. Durch eine entsprechende Gestaltung des Rastvorsprungs des Hakens zusammen mit der oben erwähnten Länge des Hakens wird somit auch bei größeren toleranz- oder beladungsbedingten Durchbiegungen des Behälters, vorzugsweise Überkopfgepäckfachs, ein sicheres Verriegeln der Verriegelungsvorrichtung und somit ein sicheres Schließen der Tür des Behälters, vorzugsweise der Gepäckfachtür des Überkopfgepäckfachs erzielt. Insbesondere bei sehr langen Überkopfgepäckfächern, welche aus Verbundwerkstoffen hergestellt sind, kommt es aufgrund der extremen Beladung zu starken Durchbiegungen in vertikaler Richtung. Die Haken herkömmlicher Verriegelungsvorrichtungen waren bei den resultierenden Verschiebungen der Halterachse in vertikaler Richtung nicht mehr in der Lage, in die Halterachse einzuhaken und ein sicheres Verschließen der Tür des Behälters, vorzugsweise der Gepäckfachtür des Überkopfgepäckfachs zu erzielen.

An zumindest einem Haken und bzw. oder am Betätigungsgriff kann zumindest ein Element angeordnet oder im Haken oder Betätigungsgriff integriert sein, wodurch beim Bewegen des Betätigungsgriffs in Richtung Haken, also in die geschlossene Position, ein Abstand zwischen dem Betätigungsgriff und dem zumindest einen Haken gebildet ist.

Das Element kann gemäß einer ersten Ausführungsvariante, bei der das Element am Betätigungsgriff angeordnet oder integriert ist, durch einen an der Innenseite des Betätigungsgriffs angeordneten oder integrierten Abstandhalter gebildet sein. Dieser Abstandhalter bewirkt bei der Bewegung des Betätigungsgriffs in die geschlossene Position eine Mitnahme des zumindest einen Hakens und erleichtert somit das Verriegeln des zumindest einen Hakens an bzw. um die Halterachse.

Wenn der zumindest eine Abstandhalter elastisch ausgebildet ist, kann auch bei toleranz- oder beladungsbedingten Abweichungen der Position der Halterachse ein sichereres Verriegeln des zumindest einen Hakens an der Halterachse erzielt werden. Der elastisch oder als Federelement ausgebildete Abstandhalter ermöglicht somit während des Schließvorgangs eine Verringerung des Abstands zwischen Betätigungsgriff und Haken, wodurch der Schließvorgang verbessert werden kann. Umgekehrt ermöglicht der elastische Abstandhalter im Fehlerfall, also bei unvollständiger Verriegelung der Verriegelungsvorrichtung einen größeren Abstand zwischen (nicht vollständig) eingehaktem Haken und Betätigungsgriff, wodurch mehr von der zumindest einen Anzeige freigegeben wird. Dadurch kann der Fehlerfall sicherer und zuverlässiger angezeigt werden.

Gemäß einer alternativen Ausführungsvariante, bei der das Element am Haken angeordnet oder integriert ist, kann das Element auch durch das oben erwähnte Langloch in dem zumindest einen Haken gebildet sein, welches Langloch vorzugsweise eine Höhe zwischen 4 mm und 12 mm aufweist. Wie bereits oben erwähnt, kann durch das Langloch die Mitnahme des Hakens bei Bewegung des Betätigungsgriffs in beide Richtungen, also beim Schließen der Verriegelungsvorrichtung und beim Öffnen der geschlossenen Verriegelungsvorrichtung erzielt werden. Ein oben erwähnter Abstandhalter zwischen Betätigungsgriff und zumindest einem Haken ist bei dieser Ausführungsvariante obsolet.

Der zumindest eine Haken der Verriegelungsvorrichtung ist vorzugsweise über eine Schenkelfeder federnd gelagert, wobei die Schenkelfeder derart angeordnet ist, dass sie in Schließrichtung des Hakens wirkt.

Auch der Betätigungsgriff kann über eine Schenkelfeder federnd gelagert sein, wobei die Schenkelfeder derart angeordnet ist, dass sie in Schließrichtung des Betätigungsgriffs wirkt.

Das Gehäuse der Verriegelungsvorrichtung ist geeigneter Weise aus brandhemmendem thermoplastischem Kunststoff gebildet und vorzugsweise im Spritzgießverfahren hergestellt.

Der zumindest eine Haken und der Betätigungsgriff der Verriegelungsvorrichtung kann aus thermoplastischem Kunststoff gebildet und ebenfalls vorzugsweise im Spritzgießverfahren hergestellt sein. Zur Verstärkung kann der Haken und bzw. oder der Betätigungsgriff bevorzugt einen Kern aus Metall, insbesondere aus Stahl, aufweisen.

Vorteilhafter Weise sind bei der Verriegelungsvorrichtung zwei Anzeigen zur Kennzeichnung eines unvollständig verriegelten Zustands der Tür vorgesehen, welche jeweils an den seitlichen Außenflächen des Betätigungsgriffs und im Wesentlichen senkrecht zur Drehachse für den Betätigungsgriff angeordnet sind.

Wenn die Verriegelungsvorrichtung nur einen Haken aufweist, ist dieser bevorzugt in der Mitte des Betätigungsgriffs angeordnet.

Wenn die Verriegelungsvorrichtung zwei Haken aufweist, dann sind diese idealerweise jeweils seitlich neben dem Betätigungsgriff angeordnet.

Gelöst wird die erfindungsgemäße Aufgabe auch durch ein oben genanntes Überkopfgepäckfach mit einer Verriegelungsvorrichtung, welche die oben beschriebenen Merkmale aufweist. Zu den dadurch erzielbaren Vorteilen wird auf die obige Beschreibung der Verriegelungsvorrichtung verwiesen.

Die vorliegende Erfindung wird anhand der beigefügten Zeichnungen näher erläutert. Darin zeigen:
- Fig. 1: eine Prinzipdarstellung zweier Überkopfgepäckfächer;
- Fig. 2: eine Ansicht auf eine Ausführungsform einer Verriegelungsvorrichtung mit zwei beiderseits des Betätigungsgriffs angeordneten Haken;
- Fig. 3: die Verriegelungsvorrichtung gemäß Fig. 2 ohne Gehäuse;
- Fig. 4: ein Schnittbild durch die Verriegelungsvorrichtung gemäß Figur 2 entlang der Schnittlinie A-A bei ordnungsgemäß geschlossener Gepäckfachtür bzw. eingerastetem Haken;
- Fig. 5A: ein Schnittbild durch die Verriegelungsvorrichtung gemäß Figur 2 entlang der Schnittlinie A-A bei ordnungsgemäß geschlossener Gepäckfachtür bzw. eingerastetem Haken;
- Fig. 5B: ein Schnittbild durch die Verriegelungsvorrichtung gemäß Figur 2 entlang der Schnittlinie B-B bei unvollständig geschlossener Gepäckfachtür bzw. nicht eingerastetem Haken;
- Fig. 6A und 6B: zwei Schnittbilder durch eine Variante einer Verriegelungsvorrichtung bei ordnungsgemäß geschlossener Gepäckfachtür bzw. eingerastetem Haken, geöffneter Gepäckfachtür und bei unvollständig geschlossener Gepäckfachtür bzw. nicht eingerastetem Haken; und
- Fig. 7: das Schnittbild durch eine weitere Ausführungsvariante der Verriegelungsvorrichtung mit elastischem Element am Betätigungsgriff, wobei diese Ausführungsvariante nicht im Umfang der Ansprüche enthalten ist.

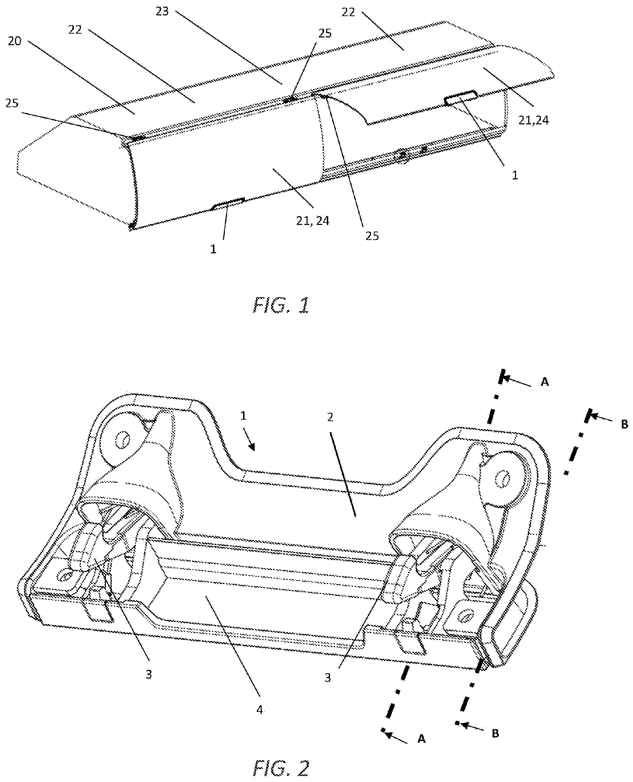

Fig. 1 zeigt eine Prinzipdarstellung zweier Überkopfgepäckfächer 22 als Sonderfall eines Behälters 20 mit einer verschwenkbaren Tür 21. Jedes Überkopfgepäckfach 22 beinhaltet einen feststehenden Behälter 23 zur Aufnahme von Gepäckstücken und eine über zumindest ein Scharnier 25 schwenkbare Gepäckfachtür 24. Beim rechten Überkopfgepäckfach 22 befindet sich die Gepäckfachtür 24 in der offenen Position, in der ein Be- und Entladen des Behälters 23 möglich ist. Beim linken Überkopfgepäckfach 22 befindet sich die Gepäckfachtür 24 in der geschlossenen Position. Über eine Verriegelungsvorrichtung 1 erfolgt die Verriegelung der Gepäckfachtür 24 im geschlossenen Zustand und auch wieder eine Entriegelung, um die Gepäckfachtür 24 öffnen zu können.

Fig. 2 zeigt eine Ansicht auf eine Ausführungsform einer Verriegelungsvorrichtung 1 mit zwei beiderseits des Betätigungsgriffs 4 angeordneten Haken 3. Die Verriegelungsvorrichtung 1 kann aber auch nur einen Haken 3 aufweisen, wobei dieser dann vorzugsweise in der Mitte des Betätigungsgriffs 4 angeordnet ist (nicht dargestellt). Die Verriegelungsvorrichtung 1 dient zum Verriegeln einer schwenkbar gelagerten Tür 21 eines Behälters 20, insbesondere einer Gepäckfachtür 24 eines Überkopfgepäckfachs 22, in der geschlossenen Position (nicht dargestellt).

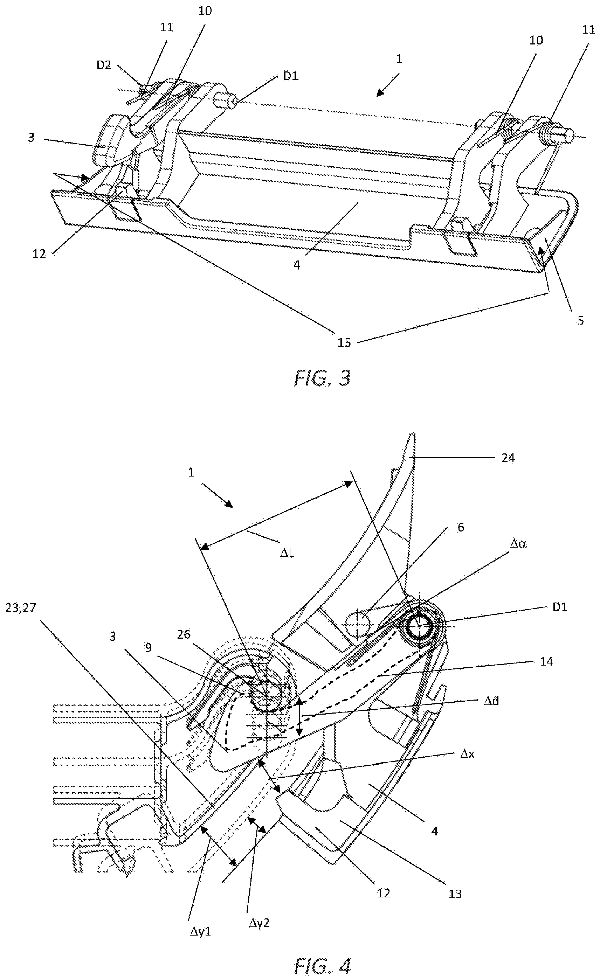

Die Verriegelungsvorrichtung beinhaltet ein Gehäuse 2, zwei am Gehäuse 2 um eine Drehachse D1 (siehe Fig. 3) federnd schwenkbar gelagerte Haken 3 zum Einhaken in eine am Behälter 20 angeordnete Halterachse 26 in der geschlossenen Position (siehe Fig. 4). Weiters ist am Gehäuse 2 um eine Drehachse D2 (siehe Fig. 3) ein federnd schwenkbar gelagerter Betätigungsgriff 4 zum Entriegeln der in der geschlossenen Position eingehakten Haken 3 angebracht. Die Drehachse D1 für die beiden Haken 3 und die Drehachse D2 für den Betätigungsgriff 4 stimmen im Wesentlichen überein bzw. sind koaxial angeordnet. Das Gehäuse 2 ist geeigneter Weise aus brandhemmendem thermoplastischem Kunststoff gebildet und vorzugsweise im Spritzgießverfahren hergestellt. Die Haken 3 und der Betätigungsgriff 4 können aus thermoplastischem Kunststoff gebildet und ebenfalls vorzugsweise im Spritzgießverfahren hergestellt sein. Zur Verstärkung können die Haken 3 und bzw. oder der Betätigungsgriff 4 bevorzugt einen Kern 14 aus Metall, insbesondere aus Stahl, aufweisen (in Fig. 4 strichliert eingezeichnet). Die Haken 3 sind durch den Betätigungsgriff 4 betätigbar, sodass bei Bewegung des Betätigungsgriffs 4 die Haken 3 aus der geschlossenen Position bewegbar sind. Bevor die Haken 3 entriegelt werden, bewegt sich der Betätigungsgriff 4 um einen vorgegebenen Winkelbereich Δα frei (siehe Fig. 4).

Wie in Fig. 3 besser ersichtlich, wobei die Verriegelungsvorrichtung 1 gemäß Fig. 2 ohne Gehäuse 2 und ohne rechten Haken 3 dargestellt ist, kann jeder Haken 3 über eine Schenkelfeder 10 federnd gelagert sein, wobei die Schenkelfeder 10 derart angeordnet ist, dass sie in Schließrichtung des Hakens 3 wirkt. Auch der Betätigungsgriff 4 kann über eine Schenkelfeder 11 federnd gelagert sein, wobei die Schenkelfeder 11 derart angeordnet ist, dass sie in Schließrichtung des Betätigungsgriffs 4 wirkt. An der Verriegelungsvorrichtung 1 befinden sich zwei Anzeigen 5 zur Kennzeichnung eines unvollständig verriegelten Zustands der Tür 21, welche jeweils an den seitlichen Außenflächen 15 des Betätigungsgriffs 4 und im Wesentlichen senkrecht zur Drehachse D2 für den Betätigungsgriff 4 angeordnet sind. Dadurch können die Anzeigen 5, welche üblicherweise in einer grellen Farbe ausgeführt sind, leicht erkannt werden, auch wenn der Betätigungsgriff 4 nur sehr gering gegenüber seiner verschlossenen Position verschwenkt ist.

Fig. 4 zeigt ein Schnittbild durch die Verriegelungsvorrichtung 1 gemäß Figur 2 entlang der Schnittlinie A-A bei ordnungsgemäß geschlossener Gepäckfachtür 24 bzw. eingerasteten Haken 3. Die Haken 3 sind durch den Betätigungsgriff 4 über zumindest einen mit dem Betätigungsgriff 4 drehfest verbundenen Mitnehmer 6 derart betätigbar, dass bei Bewegung des Betätigungsgriffs 4 über den Mitnehmer 6 der Haken 3 aus der geschlossenen Position aus der Halterachse 26 bewegbar ist. Dabei ist der Betätigungsgriff 4 um einen vorgegebenen Winkelbereich Δα von etwa 1° bis 10°, vorzugsweise 2° bis 5° frei bewegbar, bevor der Haken 3 entriegelbar ist. Der Haken 3 weist eine Länge ΔL von der Drehachse D1 und jener Stelle, welche in der geschlossenen Position der Mitte der Halterachse 26 entspricht, zwischen 24 mm und 35 mm auf.

Darüber hinaus weist der Haken 3 einen Rastvorsprung 9 zum Einrasten in der Halterachse 26 in der geschlossenen Position auf, welcher Rastvorsprung 9 derart ausgebildet ist, dass Lageänderungen Δd der Halterachse 26 aufgrund von Toleranzen und Verformungen eines beladenen Behälters 20 ausgleichbar sind. Vorzugsweise sollen Lageänderungen Δd zwischen +1 mm und -6 mm tolerierbar sein.

Gemäß einem weiteren Merkmal der Erfindung ist am Haken 3 und bzw. oder am Betätigungsgriff 4 zumindest ein Element 12 angeordnet oder im Haken 3 oder Betätigungsgriff 4 integriert, wodurch beim Bewegen des Betätigungsgriffs 4 in Richtung Haken 3, also in die geschlossene Position, ein Abstand Δx zwischen dem Betätigungsgriff 4 und dem Haken 3 gebildet wird. Im dargestellten Ausführungsbeispiel ist das Element 12 durch einen an der Innenseite des Betätigungsgriffs 4 angeordneten oder integrierten Abstandhalter 13 gebildet. Beim Bewegen des Betätigungsgriffs 4 in die geschlossene Position wird nach Überwindung des dargestellten Abstands Δx der Haken 3 mitgenommen und in die geschlossene bzw. verriegelte Position gezwungen, in welcher der Rastvorsprung 9 des Hakens 3 um die Halterachse 26 einrastet. In Fig. 4 sind strichliert einige vertikal verschobene Positionen der Halterachse 26 aufgrund von Toleranzen oder Beladung des Überkopfgepäckfachs 22 veranschaulicht. Auch bei solchen vertikalen Verschiebungen gelingt es aufgrund der Konstruktion und Dimension der Verriegelungsvorrichtung 1, diese in den ordnungsgemäß verriegelten Zustand zu bringen. Erleichtert kann dies dadurch werden, dass der zumindest eine Abstandhalter 13 elastisch ausgebildet ist, da sich dadurch der Abstand zwischen Betätigungsgriff 4 und Haken 3 aufgrund der Elastizität des Abstandhalters 13 beim Schließvorgang verringert und somit der Haken 3 leichter um die Halterachse 26 bewegt werden kann. In Fig. 4 ist der Abstand Δy1 des Betätigungsgriffs 4 zum feststehenden Teil 23 des Überkopfgepäckfachs bzw. einem unteren Kantenprofil 27 des feststehenden Teils 23 des Überkopfgepäckfachs 22 dargestellt. Bei einer Lageveränderung des feststehenden Teils 23 des Überkopfgepäckfachs 22 aufgrund von Toleranzen oder übermäßiger Beladung (strichliert eingezeichnet) reduziert sich der Abstand Δy2 des Betätigungsgriffs 4 zum unteren Kantenprofil 27 entsprechend.

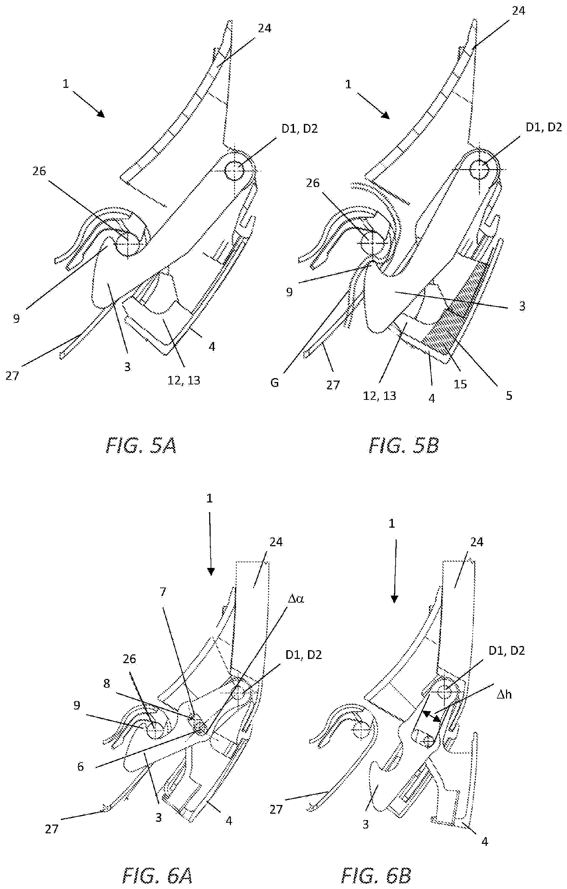

Fig. 5A und 5B stellen zwei Schnittbilder durch die Verriegelungsvorrichtung 1 gemäß Figur 2 entlang der Schnittlinie A-A und Schnittlinie B-B bei ordnungsgemäß geschlossener Gepäckfachtür 24 bzw. eingerastetem Haken 3 (Fig. 5A) und bei unvollständig geschlossener Gepäckfachtür 24 bzw. nicht eingerastetem Haken 3 (Fig. 5B) dar. Bei ordnungsgemäßer Verriegelung der Verriegelungsvorrichtung 1 gemäß Fig. 5A umschließt der Haken 3 bzw. dessen Rastvorsprung 9 die Halterachse 26, sodass die Gepäckfachtür 24 nicht ungewollt geöffnet wird. Der Betätigungsgriff 4 befindet sich in seiner geschlossenen Position, in der die seitlichen Außenflächen 15 und die daran angeordneten Anzeigen 5 nicht sichtbar sind bzw. von den Teilen des Überkopfgepäckfachs 22 abgedeckt wird. In der Ansicht gemäß Fig. 5A ist die Anzeige 5 an der seitlichen Außenfläche 15 des Betätigungsgriffs 4 nicht dargestellt. Fig. 5B zeigt den Fehlerfall, bei dem beispielsweise ein Gegenstand G, z.B. ein Kleidungsstück, zwischen Haken 3 und Halterachse 26 zu liegen kommt und ein Verriegeln des Hakens um die Halterachse 26 verhindert. Infolgedessen wird der Betätigungsgriff 4 durch den Abstandhalter 13 vom Haken 3 distanziert, wodurch der Betätigungsgriff 4 einen gewissen Winkel aus der geschlossenen Position um die Drehachse D2 verschwenkt wird. Dadurch wird der hier schraffiert gekennzeichnete Teil der seitlichen Außenflächen 15 des Betätigungsgriffs 4 und somit die Anzeigen 5 sichtbar. Dadurch kann beispielsweise einem Flugpersonal rasch und eindeutig gekennzeichnet werden, dass eine Gepäckfachtür 24 nicht ordnungsgemäß verriegelt ist. Üblicherweise sind beide seitlichen Außenflächen 15 des Betätigungsgriffs 4 mit Anzeigen 5 versehen, sodass eine Kennzeichnung einer unvollständig verriegelten Verriegelungsvorrichtung 1 aus beiden Richtungen (beim Flugzeug in Flugrichtung und entgegen der Flugrichtung bei üblicherweise seitlich nebeneinander angeordneten Überkopffächern) erkennbar ist.

Fig. 6A und 6B zeigen zwei Schnittbilder durch eine erfindungsgemäße Verriegelungsvorrichtung 1 bei ordnungsgemäß geschlossener Gepäckfachtür 24 bzw. eingerastetem Haken 3 (Fig. 6A) und bei geöffneter Gepäckfachtür 24 bzw. nicht eingerastetem Haken 3 (Fig. 6B). Der Haken weist eine Öffnung 7 in Form eines Langlochs 8 auf, in die der Mitnehmer 6 des Betätigungsgriffs 4 hineinragt. Das Langloch 8 im Haken 3 weist vorzugsweise eine Höhe Δh zwischen 4 mm und 12 mm auf. Durch diese Gestaltung wirkt das Langloch 8 bei einer Bewegung des Betätigungsgriffs 4 in die geschlossene Position als Element 12, welches den Haken 3 bei dieser Bewegung des Betätigungsgriffs 4 mitnimmt. Bei einer Bewegung des Betätigungsgriffs 4 in die geschlossene Position, also in Richtung Haken 3, erreicht der Mitnehmer 6 das obere Ende des Langlochs 8 und nimmt dann den Haken 3 entsprechend mit und bewegt diesen in die geschlossene Position. Bei dieser Ausführungsform ist der Abstandhalter 13 (siehe Fig. 4) nicht notwendig. Auch eine elastische Ausbildung ist theoretisch möglich, indem das Material des Hakens 3 oberhalb des oberen Endes des Langlochs 8 elastisch ausgebildet wird.

Bei ordnungsgemäßer Verriegelung der Verriegelungsvorrichtung 1 gemäß Fig. 6A umschließt der Haken 3 bzw. dessen Rastvorsprung 9 die Halterachse 26, sodass die Gepäckfachtür 24 nicht ungewollt geöffnet wird. Der Betätigungsgriff 4 befindet sich in seiner geschlossenen Position, in der die seitlichen Außenflächen 15 und die daran angeordneten Anzeigen 5 nicht sichtbar sind bzw. von den Teilen des Überkopfgepäckfachs 22 abgedeckt wird. Fig. 6B zeigt die Verriegelungsvorrichtung 1 in geöffnetem Zustand, in welchem der Betätigungsgriff 4 aus der geschlossenen Position um die Drehachse D2 verschwenkt wird (hier gegen den Uhrzeigersinn), bis der Mitnehmer 6 das untere bzw. rechte Ende des Langlochs 8 am Haken 3 erreicht und diesen somit betätigt und um die Drehachse D1 verschwenkt. Dadurch wird der Haken 3 bzw. der Rastvorsprung 9 des Hakens 3 aus der verriegelten Position von der Halterachse 26 gezogen und die Gepäckfachtür 24 kann geöffnet werden.

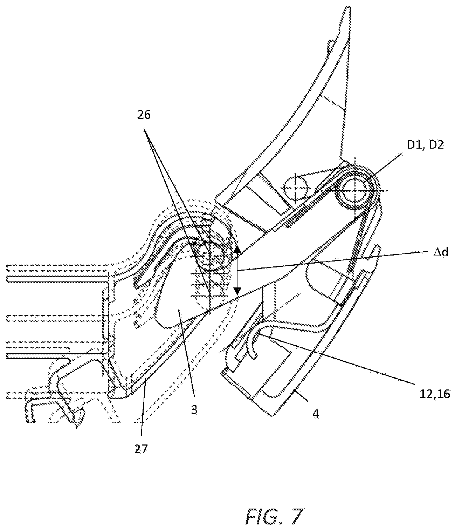

In Fig. 7 ist schließlich eine weitere Ausführungsvariante der Verriegelungsvorrichtung 1 1 wiedergegeben, welche jedoch nicht im Umfang der Ansprüche enthalten ist. In dieser Variante ist kein Langloch 8 im Haken, jedoch sind elastische Abstandhalter 13 am Betätigungsgriff vorgesehen.

Im Gegensatz zur Ausführungsvariante gemäß Fig. 4 ist das Element 12, welches beim Bewegen des Betätigungsgriffs 4 zum Haken 3, also in die geschlossene Position ein Mitnehmen des Hakens 3 mit einem Abstand bewirkt, nicht durch einen Abstandhalter 13 sondern durch ein Federelement 16 gebildet. Das Federelement 16 kann beim Schließvorgang komprimiert werden, wodurch der Abstand zwischen Betätigungsgriff 4 und Haken 3 verringert wird. Durch diese Verringerung des Abstands ist ein ordnungsgemäßes Verriegeln des Hakens 3 um die Halterachse 26 auch dann möglich, wenn aufgrund von Toleranzen oder einer übermäßigen Beladung des feststehenden Teils 23 des Überkopfgepäckfachs 22 die Halterachse 26 in vertikaler Richtung nach unten verschoben angeordnet ist. Die Lageänderung Δd der Halterachse 26 ist in Fig. 7 strichliert eingezeichnet.

Die gegenständliche Verriegelungsvorrichtung 1 ermöglicht eine optimale und sichere Anzeige einer unvollständig verriegelten Position, um sicherzustellen, dass die Gepäckfachtür 24 des Überkopfgepäckfachs 22 nicht unkontrolliert aufklappt und im feststehenden Teil 23 des Überkopfgepäckfachs 22 gelagerte Gepäckstücke herausfallen und zu Verletzungen der Passagiere führen können.

Weiters ist durch die spezielle Konstruktion der Verriegelungsvorrichtung 1, insbesondere die Länge ΔL des Hakens 3, ein sichereres Schließen der Verriegelungsvorrichtung 1 auch bei einem Durchbiegen des feststehenden Teils 23 des Überkopfgeäckfachs 22 möglich. Die Verriegelungsvorrichtung 1 kann relativ einfach und kostengünstig hergestellt werden und ist frei von elektronischen Komponenten.

## Patentansprüche

1. Verriegelungsvorrichtung (1) zum Verriegeln einer schwenkbar gelagerten Tür (21) eines Behälters (20), insbesondere einer Gepäckfachtür (24) eines Überkopfgepäckfachs (22), in der geschlossenen Position, mit einem Gehäuse (2), zumindest einem am Gehäuse (2) um eine Drehachse (D1) federnd schwenkbar gelagerten Haken (3) zum Einhaken in eine am Behälter (20) angeordnete Halterachse (26) in der geschlossenen Position, einem am Gehäuse (2) um eine Drehachse (D2) federnd schwenkbar gelagerten Betätigungsgriff (4) zum Entriegeln des zumindest einen in der geschlossenen Position eingehakten Hakens (3), wobei die Drehachse (D1) für den zumindest einen Haken (3) und die Drehachse (D2) für den Betätigungsgriff (4) koaxial angeordnet sind, der zumindest eine Haken (3) durch den Betätigungsgriff (4) über zumindest einen mit dem Betätigungsgriff (4) drehfest verbundenen Mitnehmer (6) derart betätigbar ist, dass bei Bewegung des Betätigungsgriffs (4) über den zumindest einen Mitnehmer (6) der zumindest eine Haken (3) aus der geschlossenen Position bewegbar ist, und mit zumindest einer Anzeige (5) zur Kennzeichnung eines unvollständig verriegelten Zustands der Tür (21), wobei die zumindest eine Anzeige (5) zur Kennzeichnung eines unvollständig verriegelten Zustands der Tür (21) an zumindest einer seitlichen Außenfläche (15) des Betätigungsgriffs (4) und im Wesentlichen senkrecht zur zweiten Drehachse (D2) für den Betätigungsgriff (4) angeordnet ist, **dadurch gekennzeichnet, dass** der Betätigungsgriff (4) um einen vorgegebenen Winkelbereich (Δα) frei bewegbar ist, bevor der zumindest eine Haken (3) entriegelbar ist, und der zumindest eine Haken (3) ein Langloch (8) zur Aufnahme des zumindest einen Mitnehmers (6) aufweist.

2. Verriegelungsvorrichtung (1) nach Anspruch 1, **dadurch gekennzeichnet, dass** der vorgegebene Winkelbereich (Δα), um den der Betätigungsgriff (4) frei bewegbar ist, 1° bis 10°, vorzugsweise 2° bis 5°, beträgt.

3. Verriegelungsvorrichtung (1) nach Anspruch 1 oder 2, **dadurch gekennzeichnet, dass** der zumindest eine Haken (3) eine Länge (ΔL) von der Drehachse (D1) und jener Stelle, welche in der geschlossenen Position der Mitte der Halterachse (26) entspricht, zwischen 24 mm und 35 mm aufweist.

4. Verriegelungsvorrichtung (1) nach einem der Ansprüche 1 bis 3, **dadurch gekennzeichnet, dass** jeder Haken (3) einen Rastvorsprung (9) zum Einrasten jedes Hakens (3) in der Halterachse (26) in der geschlossenen Position aufweist, welcher Rastvorsprung (9) bei ordnungsgemäßer Verriegelung die Halterachse (26) umschließt.

5. Verriegelungsvorrichtung (1) nach einem der Ansprüche 1 bis 4, **dadurch gekennzeichnet, dass** am Betätigungsgriff (4) zumindest ein Element (12) angeordnet oder im Betätigungsgriff (4) integriert ist, wodurch beim Bewegen des Betätigungsgriffs (4) in Richtung Haken (3), also in die geschlossene Position, ein Abstand (Δx) zwischen dem Betätigungsgriff (4) und dem zumindest einen Haken (3) gebildet ist.

6. Verriegelungsvorrichtung (1) nach Anspruch 5, **dadurch gekennzeichnet, dass** das Element (12) durch einen an der Innenseite des Betätigungsgriffs (4) angeordneten oder integrierten Abstandhalter (13) gebildet ist.

7. Verriegelungsvorrichtung (1) nach Anspruch 6, **dadurch gekennzeichnet, dass** der zumindest eine Abstandhalter (13) elastisch ausgebildet ist.

8. Verriegelungsvorrichtung (1) nach einem der Ansprüche 1 bis 7, **dadurch gekennzeichnet, dass** an zumindest einem Haken (3) zumindest ein Element (12) angeordnet oder im Haken (3) integriert ist, wodurch beim Bewegen des Betätigungsgriffs (4) in Richtung Haken (3), also in die geschlossene Position, ein Abstand (Δx) zwischen dem Betätigungsgriff (4) und dem zumindest einen Haken (3) gebildet ist.

9. Verriegelungsvorrichtung (1) nach Anspruch 8, **dadurch gekennzeichnet, dass** das Element (12) durch das Langloch (8) in dem zumindest einen Haken (3) gebildet ist, welches Langloch (8) vorzugsweise eine Höhe (Δh) zwischen 4 mm und 12 mm aufweist.

10. Überkopfgepäckfach (22) mit einem feststehenden Behälter (23) und einer über zumindest ein Scharnier (25) schwenkbare Gepäckfachtür (24) und einer Verriegelungsvorrichtung (1) zur Verriegelung der Gepäckfachtür (24) im geschlossenen Zustand, **dadurch gekennzeichnet, dass** die Verriegelungsvorrichtung (1) nach einem der Ansprüche 1 bis 9 ausgebildet ist.

## Claims

1. Locking device (1) for locking a pivotably mounted door (21) of a container (20), in particular a luggage compartment door (24) of an overhead luggage compartment (22), in the closed position, having a housing (2), at least one hook (3) pivotably mounted on the housing (2) about an axis of rotation (D1) for hooking into a retaining axis (26) arranged on the container (20) in the closed position, an operating handle (4) pivotably spring-mounted on the housing (2) about an axis of rotation (D2) for unlocking the at least one hook (3) hooked in the closed position, wherein the axis of rotation (D1) for the at least one hook (3) and the axis of rotation (D2) for the operating handle (4) are arranged coaxially, the at least one hook (3) can be actuated by the operating handle (4) via at least one catch (6) non-rotatably connected to the operating handle (4) in such a way that, when the operating handle (4) is moved via the at least one catch (6), the at least one hook (3) can be moved out of the closed position, and with at least one indicator (5) for the identification of an incompletely locked state of the door (21), wherein the at least one indicator (5) for indicating an incompletely locked state of the door (21) is arranged on at least one lateral outer surface (15) of the operating handle (4) and essentially perpendicular to the second axis of rotation (D2) for the operating handle (4), **characterized in that** the operating handle (4) is freely movable around a predetermined angle range (Δα) before the at least one hook (3) can be unlocked and the at least one hook (3) comprises an oblong hole (8) for receiving the at least one catch (6).

2. Locking device (1) according to claim 1, **characterized in that** the predetermined angle range (Δα) about which the operating handle (4) is freely movable is 1° to 10°, preferably 2° to 5°.

3. Locking device (1) according to claim 1 or 2, **characterized in that** the at least one hook (3) comprises a length (ΔL) of between 24 mm and 35 mm from the axis of rotation (D1) and that point which, in the closed position, corresponds to the center of the retaining axis (26).

4. Locking device (1) according to one of claims 1 to 3, **characterized in that** each hook (3) comprises a latching protrusion (9) for latching each hook (3) in the retaining axis (26) in the closed position, which latching protrusion (9) encloses the retaining axis (26) when the locking device is properly closed.

5. Locking device (1) according to one of claims 1 to 4, **characterized in that** at least on element (12) is arranged on the operating handle (4) or is integrated into the operating handle (4), whereby a space (Δx) is formed between the operating handle (4) and the at least one hook (3) when the operating handle (4) is moved in the direction of the hook (3), that is into the closed position.

6. Locking device (1) according to claim 5, **characterized in that** the element (12) is formed by a spacer (13) arranged or integrated on the inside of the operating handle (4).

7. Locking device (1) according to claim 6, **characterized in that** the at least one spacer (13) is formed to be elastic.

8. Locking device (1) according to one of claims 1 to 7, **characterized in that** at least on element (12) is arranged on at least one hook (3) or is integrated into the hook (3), whereby a space (Δx) is formed between the operating handle (4) and the at least one hook (3) when the operating handle (4) is moved in the direction of the hook (3), that is into the closed position.

9. Locking device (1) according to claim 8, **characterized in that** the element (12) is formed by the oblong hole (8) in the at least one hook (3), which oblong hole (8) preferably comprises a height (Δh) between 4 mm and 12 mm.

10. Overhead luggage compartment (22) with a fixed container (23) and a luggage compartment door (24) pivotable via at least one hinge (25) and a locking device (1) for locking the luggage compartment door (24) in the closed state, **characterized in that** the locking device (1) is designed according to one of claims 1 to 9.

## Revendications

1. Dispositif de verrouillage (1) pour verrouiller une porte pivotante (21) d'un conteneur (20), en particulier une porte de compartiment à bagages (24) d'un compartiment à bagages supérieur (22), en position fermée, comprenant un boîtier (2), au moins un crochet (3) monté de manière pivotante et élastique sur le boîtier (2) autour d'un axe de rotation (D1) pour s'accrocher à un axe de maintien (26) disposé sur le conteneur (20) en position fermée, une poignée d'actionnement (4) montée de manière pivotante et élastique sur le boîtier (2) autour d'un axe de rotation (D2) pour déverrouiller le au moins un crochet (3) accroché en position fermée, l'axe de rotation (D1) pour le au moins un crochet (3) et l'axe de rotation (D2) pour la poignée d'actionnement (4) étant disposés coaxialement, le au moins un crochet (3) pouvant être actionné par la poignée d'actionnement (4) via au moins un entraîneur (6) fixé en rotation à la poignée d'actionnement (4) de telle sorte que lors du mouvement de la poignée d'actionnement (4), le au moins un crochet (3) peut être déplacé de la position fermée via le au moins un entraîneur (6), et comprenant au moins un indicateur (5) pour signaler un état de verrouillage incomplet de la porte (21), le au moins un indicateur (5) pour signaler un état de verrouillage incomplet de la porte (21) étant disposé sur au moins une surface extérieure latérale (15) de la poignée d'actionnement (4) et sensiblement perpendiculairement au deuxième axe de rotation (D2) pour la poignée d'actionnement (4), **caractérisé en ce que** la poignée d'actionnement (4) est librement mobile sur une plage angulaire prédéterminée (Δα) avant que le au moins un crochet (3) puisse être déverrouillé, et le au moins un crochet (3) présente un trou oblong (8) pour recevoir le au moins un entraîneur (6).

2. Dispositif de verrouillage (1) selon la revendication 1, **caractérisé en ce que** la plage angulaire prédéterminée (Δα) sur laquelle la poignée d'actionnement (4) est librement mobile est de 1° à 10°, de préférence de 2° à 5°.

3. Dispositif de verrouillage (1) selon la revendication 1 ou 2, **caractérisé en ce que** le au moins un crochet (3) présente une longueur (ΔL) entre l'axe de rotation (D1) et le point qui correspond au centre de l'axe de maintien (26) en position fermée, comprise entre 24 mm et 35 mm.

4. Dispositif de verrouillage (1) selon l'une des revendications 1 à 3, **caractérisé en ce que** chaque crochet (3) présente une saillie d'enclenchement (9) pour l'enclenchement de chaque crochet (3) dans l'axe de maintien (26) en position fermée, laquelle saillie d'enclenchement (9) entoure l'axe de maintien (26) lors d'un verrouillage correct.

5. Dispositif de verrouillage (1) selon l'une des revendications 1 à 4, **caractérisé en ce qu'**au moins un élément (12) est disposé sur la poignée d'actionnement (4) ou intégré dans la poignée d'actionnement (4), créant ainsi une distance (Δx) entre la poignée d'actionnement (4) et le au moins un crochet (3) lors du déplacement de la poignée d'actionnement (4) en direction du crochet (3), c'est-à-dire vers la position fermée.

6. Dispositif de verrouillage (1) selon la revendication 5, **caractérisé en ce que** l'élément (12) est formé par un espaceur (13) disposé sur la face intérieure de la poignée d'actionnement (4) ou intégré à celle-ci.

7. Dispositif de verrouillage (1) selon la revendication 6, **caractérisé en ce que** le au moins un espaceur (13) est conçu de manière élastique.

8. Dispositif de verrouillage (1) selon l'une des revendications 1 à 7, **caractérisé en ce qu'**au moins un élément (12) est disposé sur au moins un crochet (3) ou intégré dans le crochet (3), créant ainsi une distance (Δx) entre la poignée d'actionnement (4) et le au moins un crochet (3) lors du déplacement de la poignée d'actionnement (4) en direction du crochet (3), c'est-à-dire vers la position fermée.

9. Dispositif de verrouillage (1) selon la revendication 8, **caractérisé en ce que** l'élément (12) est formé par le trou oblong (8) dans le au moins un crochet (3), lequel trou oblong (8) présente de préférence une hauteur (Δh) comprise entre 4 mm et 12 mm.

10. Compartiment à bagages supérieur (22) comprenant un conteneur fixe (23) et une porte de compartiment à bagages (24) pivotante via au moins une charnière (25) et un dispositif de verrouillage (1) pour verrouiller la porte du compartiment à bagages (24) en position fermée, **caractérisé en ce que** le dispositif de verrouillage (1) est conçu selon l'une des revendications 1 à 9.
